# EUROPEAN PATENT SPECIFICATION

(11) **EP 2 782 164 B1**
(45) Date of publication and mention of the grant of the patent: **30.05.2018**
(21) Application number: 14160709.3
(22) Date of filing: 19.03.2014
(51) Int. Cl.: H01M 2/10, H01M 2/34

(54) **BATTERY CELL PROTECTING CASE FOR USE IN POWER BATTERIES**
BATTERIEZELLENSCHUTZVERKLEIDUNG ZUR VERWENDUNG IN LEISTUNGSBATTERIEN
BOÎTIER DE PROTECTION DE PILE DE BATTERIE DESTINÉ À ÊTRE UTILISÉ DANS DES BATTERIES DE PUISSANCE

(30) Priority: 20.03.2013 CN 201310090765
(43) Date of publication of application: 24.09.2014
(73) Proprietor: NingDe Amperex Technology Limited, Ningde City, Fujian 352100 (CN)
(72) Inventor: Hu, Jung zhong, 352100 NingDe City Fujian (CN); Deng, Ping hua, 352100 NingDe City Fujian (CN); Wu, Kai, 352100 NingDe City Fujian (CN); Lu, Yan hua, 352100 NingDe City Fujian (CN); Li, Quan kun, 352100 NingDe City Fujian (CN)
(74) Representative: Grünecker Patent- und Rechtsanwälte PartG mbB

(56) References cited:
- EP-A2- 2 518 813
- CN-U- 202 495 499
- US-A1- 2007 269 711
- US-A1- 2008 280 197
- US-B1- 6 376 120

## Description

### FIELD OF THE INVENTION

The present patent application generally relates to power batteries, and more particularly, relates to a battery cell protecting case for use in power batteries, especially hard shell power batteries.

### BACKGROUND OF THE INVENTION

With rapid development of society and enhancement of people's awareness of environmental protection, rechargeable batteries are becoming more and more popular as power sources in various kinds of equipments, for instance mobile phones, electric tools, notebook computers, electric vehicles and power stations. The electric vehicles and the power stations usually need a power battery with a large capacity. To improve the safety performance in use of the rechargeable battery, a hard shell power battery is required.

Safety performance of a power battery, such as a lithium ion battery, used as vehicle battery plays a very important role. At present, the main way to ensure the safety performance of a power battery under pressure is to install a positive electrode metal plate and a negative electrode metal plate in the power battery. The positive electrode metal plate and the negative electrode metal plate are connected to each other to short circuit the power battery when the power battery is excessively under pressure.

However, metal plates will inevitably reduce the mass energy density of the power battery, increase the complexity of the mechanical structure of the power battery, and reduce the reliability of the power battery.

What is needed, therefore, is to provide a hard shell power battery having desirable safety performance which can short circuit the power battery when the power battery is excessively under pressure CN202495499U discloses a hard shell power battery and US20070269711 discloses a battery comprising a center pin which can short-circuit the electrodes when the battery is flattened by external forces.

### SUMMARY OF THE INVENTION

One objective of the present invention is to provide a power battery which can short circuit the power battery under overpressure, so as to avoid safety accident in the use of the power battery.

According to one aspect of the present invention, a battery cell protecting case for assembling a battery cell having a positive pole and a negative pole in a conductive battery housing being electrically connected to one of the positive pole or the negative pole is provided. The battery cell protecting case includes:
a conductive supporting plate being electrically connected to the other one of the positive pole or the negative pole of the battery cell, and the conductive supporting plate being provided with a layer of insulative material for insulatively separate the conductive supporting plate from the conductive battery housing the and an exposed portion without insulative material formed thereon; and
a nonconductive bracket coupled to the conductive supporting plate, the nonconductive bracket having a through slot corresponding to the exposed portion, the exposed portion being capable of electrically connecting with the conductive battery housing via the through slot due to deformation of the conductive battery housing under pressure.

According to one aspect of the present invention, an outer surface of the nonconductive bracket is 0.5 to 3.0mm higher than an outer surface of the conductive supporting plate.

According to one aspect of the present invention, the conductive supporting plate is formed with a layer of nonconductive separator, and the exposed portion in the through slot is formed with at least one sharp protrusion which can pierce the separator and contact the deformed conductive battery housing when pressure on the power battery is greater than a predetermined value.

According to one aspect of the present invention, the sharp protrusion is 0.1 to 1.0mm lower than the outer surface of the nonconductive bracket.

According to one aspect of the present invention, the nonconductive bracket is formed with a cross strip having a width of 1 to 5mm over the through slot.

According to one aspect of the present invention, the nonconductive bracket defines at least two through slots with a blocking portion having a width of 1 to 3mm between two adjacent through slots, a cutout for receiving the blocking portion is defined blow the blocking portion, the blocking portion is deformed to be received in the cutout when the pressure on the power battery is greater than a predetermined value, thereby causing the deformed conductive battery housing to electrically connect with the exposed portion in the through slot.

According to one aspect of the present invention, the nonconductive bracket is formed with a locking block extending into the through slot to press against the exposed portion, the locking block is deformed when the pressure on the power battery is greater than a predetermined value to release the exposed portion, thereby causing the exposed portion to rebound up and to electrically connect with the conductive battery housing.

According to one aspect of the present invention, the through slot is defined in a center of the nonconductive bracket.

According to one aspect of the present invention, the through slot has a curvature of 60 to 90 degrees and a width of 10 to 50mm, preferably 20 to 30mm.

According to one aspect of the present invention, a hard shell power battery is provided. The hard shell power battery includes:
a conductive battery housing;
a pair of battery cell protecting cases corporately defining a receiving chamber for receiving a battery cell positioned in the battery housing, each battery cell protecting case comprising a conductive supporting plate being provided with a layer of insulative material for insulatively separate the conductive supporting plate from the conductive battery housing and an exposed portion without insulative material formed thereon and
two nonconductive brackets at two sides of the conductive supporting plate, each nonconductive bracket defining a through slot corresponding to the exposed portion of the conductive supporting plate; and
a battery cell having a positive pole and an negative pole accommodated in the receiving chamber, one of the positive pole or the negative pole being electrically connected with the conductive supporting plate and the other one of the positive pole or the negative pole being electrically connected to the conductive battery housing, the exposed portion being capable of electrically contacting the conductive battery housing via the through slot due to deformation of the conductive battery housing under pressure, so as to short circuit the power battery.

Compared with the prior art, the hard shell power battery of the present invention does not need additional mechanical structure. When deformed under pressure, the conductive battery housing can be electrically connected to the exposed portion via the through slot defined in the nonconductive bracket, to short circuit the power battery and reduce the voltage of the battery cell. Thus, safety performance of the power battery under pressure is improved.

Other advantages and novel features will be drawn from the following detailed description of preferred embodiments with the attached drawings. The accompanying drawings, which are incorporated in and constitute a part of this specification, illustrate embodiments of the present invention and, together with a general description of the invention given above, and the detailed description of the embodiments given below, serve to explain the principles of the invention:

### BRIEF DESCRIPTION OF THE DRAWINGS

FIG. 1 is a schematic view of a battery cell protecting case for use in a hard shell power battery according to a first embodiment of the present invention;
FIG. 2 is an enlarged view of a through slot of the battery cell protecting case of a circled portion A in FIG. 1;
FIG. 3 is an enlarged view of a through slot of a battery cell protecting case according to a second embodiment of the present invention;
FIG. 4 is an enlarged view of a through slot of a battery cell protecting case according to a third embodiment of the present invention;
FIG. 5 is an enlarged view of a through slot of a battery cell protecting case according to a fourth embodiment of the present invention; and
FIG. 6 is an enlarged view of a through slot of a battery cell protecting case according to a fifth embodiment of the present invention.

### DETAILED DESCRIPTION OF THE INVENTION

Generally, a hard shell power battery includes a battery cell, a battery cell protecting case and a battery housing. The battery cell protecting case defines a receiving chamber. The battery cell is seated in the receiving chamber of the battery cell protecting case. The battery cell protecting case coupled with the battery cell is accommodated in the battery housing.

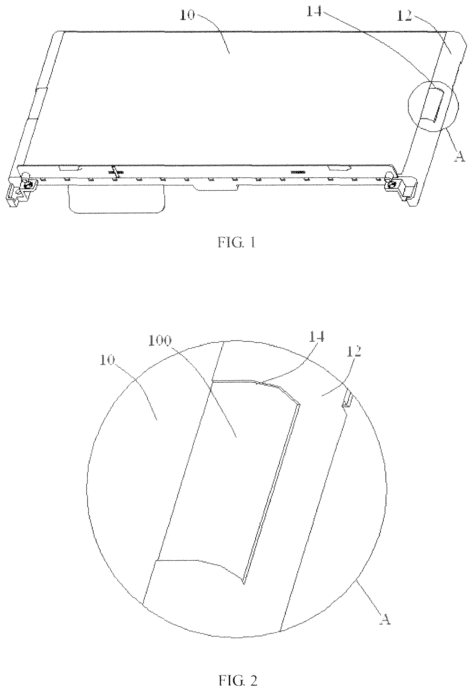

Referring to FIG. 1, the hard shell power battery in accordance with a first embodiment of the present invention generally includes a conductive supporting plate 10 and a nonconductive bracket 12 secured to two sides of the conductive supporting plate 10. The conductive supporting plate 10 and the nonconductive bracket 12 corporately define a receiving chamber for receiving the battery cell therein.

In order to safely protect the battery cell, the conductive supporting plate 10 of the present invention is made from conductive material, such as copper. An electrode (not shown), such as a positive pole, is electrically connected to the cooper plate. Most of the copper plate is covered by a separator which can insulatively separate the conductive supporting plate 10 from the battery housing, but corners of the copper plate are not covered by the separator. The material of the separator is PET (polyethylene terephthalate) plastic, PP (polypropylene) plastic, or PE (polyethylene) plastic.

Referring to FIG. 2, a corner of the nonconductive bracket 12 connected to the conductive supporting plate 10 defines a through slot 14 in a center thereof. The through slot 14 has a curvature of 60 to 90 degrees and a width of 10mm to 50 mm, preferably 20 to 30mm. Because the corners on two sides of the conductive supporting plate 10 are not covered by the separator, an exposed portion 100 without insulative material, e.g. the separator, formed thereon is defined. The exposed portion 100 has a curvature of 60 to 90 degrees and a width of 20 to 30mm. To prevent short circuit of the battery cell in normal use, connection between the nonconductive bracket 12 and the conductive supporting plate 10 is a step type connection. An outer surface of the nonconductive bracket 12 is 0.5 to 3.0mm, preferably 1.0mm, higher than the outer surface of the conductive supporting plate 10. So, the height of the nonconductive bracket 12 and the curvature of the through slot 14 can insulate the exposed portion 100 in the through slot 14 from other parts of the battery housing in normal use. According to one embodiment of the present invention, the nonconductive bracket 12 is an integrated bracket made from plastic material by injection molding, and the plastic material is PP plastic.

The battery housing is made from conductive material, such as, aluminum.

In assembly, the battery cell is received in receiving chamber of the battery cell protecting case enclosed by the nonconductive bracket 12 and the conductive supporting plate 10. The cooper electrode of the conductive supporting plate 10 is welded to a negative pole extending from the battery cell. Then, the battery cell and the battery cell protecting case are installed in the battery housing to form the hard shell power battery. Lastly, the assembled battery housing is connected to a positive pole via a top cover.

When the hard shell power battery described above is excessively pressed in use, the battery housing is deformed toward the exposed portion 100 until electrically contacts the exposed portion 100, the power battery occurs short circuit so as to discharge electricity and avoid safety accident, and the safety performance of the power battery under pressure is improved. Because the through slots 14 are defined in each of four corners of the battery cell protecting case to expose the exposed portion 100, the power battery will be short circuited when the exposed portion 100 in any one of the through slot 14 is electrically connected to the battery housing. Therefore, the rate of short circuit of the power battery is high when the battery housing is excessively pressed, to improve the safety performance of the power battery.

The through slot 14 of the nonconductive bracket 12 of the present invention is located in center of the corner of the nonconductive bracket 12 in order to make the battery housing to easily contact the exposed portion 100 in the through slot 14 when the battery housing is pressed. The width of the through slot 14 is about 20 to 30mm, which not only can make the battery housing contact the exposed portion 100 when the battery housing is pressed, but also can electrically insulate the battery housing from the copper plate when the power battery is in normal use.

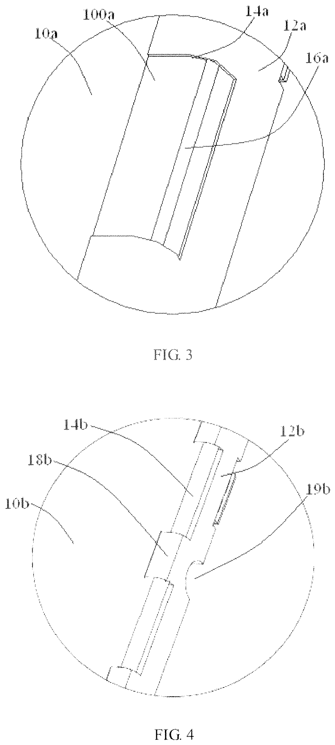

Referring to FIG. 3, to improve the safety performance of the power battery in normal use, in the second embodiment of the hard shell power battery in accordance with the present invention, a cross strip 16a is defined on the nonconductive bracket 12a over the through slot 14a of the nonconductive bracket 12a. The cross strip 16a is parallel to an edge of the nonconductive bracket 12a. A width of the cross strip 16a is in a range from 1 to 5mm, so as to sufficiently insulate the battery housing from the exposed portion 100a when the power battery is not deformed. When the power battery is excessively pressed, the battery housing will deform and, the battery housing breaks the cross strip 16a and electrically contacts the exposed portion 100a, thereby forming short circuit in the power battery.

FIG. 4 illustrates a third embodiment in accordance with the present invention, difference between the third embodiment and the first embodiment of the hard shell power battery lies in that the nonconductive bracket 12b in the third embodiment defines two through slots 14b in each corner thereof. A width of a blocking portion 18b located between the two through slots 14b is in a range from 1 to 3mm. The blocking portion 18b is arc-shaped. A cutout 19b with a diameter less than 10mm is defined below the blocking portion 18b. When a force on the blocking portion 18b is greater than a predetermined value, such as 1T, the blocking portion 18b is deformed downwardly. A width of each of the two through slots 14b is in a range from 10 to 40mm, a curvature of each through slot 14b is in a range from 60 to 90 degrees. In order to prevent the battery cell from being short circuit in normal use, a connection between the nonconductive bracket 12b and the conductive supporting plate 10b is also a step type connection. Outer surface of the nonconductive bracket 12b is 0.5 mm higher than that of the conductive supporting plate 10b. The height of the nonconductive bracket 12b, particularly the height of the blocking portion 18b, can ensure the copper plate to be insulatively insulated from other portions of the nonconductive bracket 12b. When the power battery is excessively pressed, the battery housing will deform, the blocking portion 18b is pressed down and deforms to be retracted in the cutout 19b, so that the deformed battery housing can contact the exposed portion 100 and short circuit the power battery.

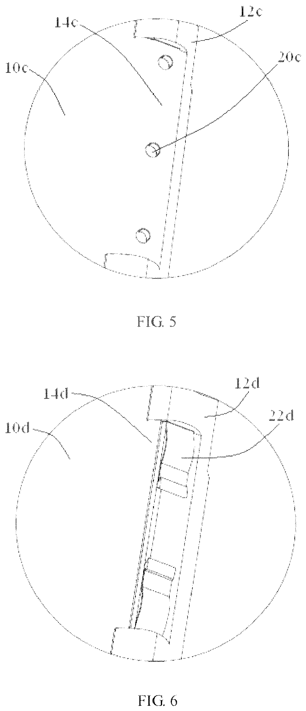

Referring to FIG. 5, in the fourth embodiment of the hard shell power battery of the present invention, a corner of the nonconductive bracket 12c connected to the conductive supporting plate 10c defines a through slot 14c in a center thereof. A curvature of the through slot 14c in the corner is in a range from 60 to 90 degrees, a width of the through slot 14c is 30mm. Connection between the nonconductive bracket 12c and the conductive supporting plate 10c in the through slot 14c is a step type connection, and outer surface of the nonconductive bracket 12c is 0.5 to 3.0mm higher than that of the conductive supporting plate 10c. Difference between the fourth embodiment and the first embodiment lies in that the corner of the conductive supporting plate 10c is wholly covered by the insulative separator, and the conductive supporting plate 10c doesn't be exposed in the through slot 14c. However, the top surface of the conductive supporting plate 10c is not arc-shaped, which is different from the shape of the conductive supporting plate of the first to third embodiments described above. A plurality of sharp protrusions 20c is disposed on the cooper plate in the through slot 14c. Each sharp protrusion 20c is 0.1 to 1.0mm less than that of an outer surface of the nonconductive bracket 12c. The plurality of sharp protrusions 20c is normally covered by the separator, like other parts of the copper plate. When the power battery is pressed, if the pressure is less than a predetermined force, such as 1T, the plurality of sharp protrusions 20c cannot pierce the separator, and the battery cell insulative separates from the battery housing. If the pressure on the battery housing is greater than a predetermined value, such as 1T, the plurality of sharp protrusions 20c pierce the separator to contact the battery housing and further short circuit the power battery.

Referring to FIG. 6, in the hard shell power battery of the fifth embodiment of the present invention, the nonconductive bracket 12 defines a through slot 14d in a center thereof. A curvature of the through slot 14d in the corner is about 60 to 90 degrees, and a width of the through slot 14d is 30mm. Difference between the fifth embodiment and the first embodiment lies in that, connection between the nonconductive bracket 12d and the conductive supporting plate 10d in the through slot 14d is also a step type connection, outer surface of the nonconductive bracket 12d is about 0.5mm higher than that of the conductive supporting plate 10d. The nonconductive bracket 12d forms two locking blocks 22d which extend into the through slot 14d to press against the exposed portion 100. A height of each locking block 22d is equal to that of the nonconductive bracket 12d, so that the exposed portion 100 in the through slot 14d fully insulates the exposed portion 100 from other parts of the nonconductive bracket 12d. When the power battery is pressed, if the pressure is less than a predetermined force, such as 1T, the locking blocks 22d are still locked on the exposed portion 100, and the bare battery cell is insulated from the battery housing. However, if the pressure on the battery housing is greater than the predetermined value, such as 1T, the locking blocks 22d deforms to release the exposed portion 100. The exposed portion 100 rebounds up to contact the battery housing, so as to short circuit the power battery.

It can be known as described above, the hard shell power battery of the present invention does not need additional mechanical structure. When deformed under pressure, the battery housing can be electrically connected to the exposed portion via the through slot defined in the nonconductive bracket to short circuit the power battery and reduce the voltage of the battery cell. Therefore, safety performance of the power battery under excessive pressure is improved.

While the present invention has been illustrated by the above description of the preferred embodiments thereof, while the preferred embodiments have been described in considerable detail, it is not intended to restrict or in any way to limit the scope of the appended claims to such details. Consequently, the present invention is not limited to the specific details and the illustrative examples as shown and described.

## Claims

1. A battery cell protecting case for assembling a battery cell having a positive pole and a negative pole in a conductive battery housing being electrically connected to one of the positive pole or the negative pole, **characterized in that** the battery cell protecting case comprising:
a conductive supporting plate (10, 10a, 10b, 10c, 10d) being electrically connected to the other one of the positive pole or the negative pole of the battery cell, and the conductive supporting plate (10,10a,10b,10c,10d) being provided with a layer of insulative material and an exposed portion (100,100a) without insulative material formed thereon; and
a nonconductive bracket (12,12a,12b,12c,12d) coupled to the conductive supporting plate (10,10a,10b,10c,10d), the nonconductive bracket (12,12a,12b,12c,12d) having a through slot (14,14a,14b,14c,14d) corresponding to the exposed portion (100, 100a), the exposed portion (100, 100a) being capable of electrically connecting with the conductive battery housing via the through slot (14,14a,14b,14c,14d) due to deformation of the conductive battery housing under pressure.

2. The battery cell protecting case of claim 1, **characterized in that** an outer surface of the nonconductive bracket (12,12a,12b,12c,12d) is 0.5 to 3.0mm higher than an outer surface of the conductive supporting plate (10,10a,10b,10c,10d).

3. The battery cell protecting case of claim 2, **characterized in that** the conductive supporting plate (10,10a,10b,10c,10d) is formed with a layer of nonconductive separator, and the exposed portion (100,100a) in the through slot (14, 14a, 14b, 14c, 14d) is formed with at least one sharp protrusion (20c) which can pierce the separator and contact the deformed conductive battery housing when pressure on the power battery is greater than a predetermined value.

4. The battery cell protecting case of claim 3, **characterized in that** the sharp protrusion (20c) is 0.1 to 1.0mm lower than the outer surface of the nonconductive bracket (12, 12a, 12b, 12c, 12d).

5. The battery cell protecting case of claim 1, **characterized in that** the nonconductive bracket (12, 12a, 12b, 12c, 12d) is formed with a cross strip (16a) having a width of 1 to 5mm over the through slot (14,14a,14b,14c,14d).

6. The battery cell protecting case of claim 1, **characterized in that** the nonconductive bracket (12,12a,12b,12c,12d) defines at least two through slots (14,14a,14b,14c,14d) with a blocking portion (18b) having a width of 1 to 3mm between two adjacent through slots (14,14a, 14b,14c,14d), a cutout (19b) for receiving the blocking portion (18b) is defined blow the blocking portion (18b), the blocking portion (18b) is deformed to be received in the cutout (19b) when the pressure on the power battery is greater than a predetermined value, thereby causing the deformed conductive battery housing to electrically connect with the exposed portion (100,100a) in the through slot (14,14a,14b,14c,14d).

7. The battery cell protecting case of claim 1, **characterized in that** the nonconductive bracket (12, 12a, 12b, 12c, 12d) is formed with a locking block (22d) extending into the through slot (14, 14a, 14b, 14c, 14d) to press against the exposed portion (100, 100a), the locking block (22d) is deformed when the pressure on the power battery is greater than a predetermined value to release the exposed portion (100, 100a), thereby causing the exposed portion (100, 100a) to rebound up and to electrically connect with the conductive battery housing.

8. The battery cell protecting case of any one of claims 1 to 7, **characterized in that** the through slot (14, 14a, 14b, 14c, 14d) is defined in a center of the nonconductive bracket (12, 12a, 12b, 12c, 12d).

9. The battery cell protecting case of any one of claims 1 to 7, **characterized in that** the through slot (14, 14a, 14b, 14c, 14d) has a curvature of 60 to 90 degrees and a width of 10 to 50mm, preferably 20 to 30mm.

10. A hard shell power battery, comprising:
a conductive battery housing;
a pair of battery cell protecting cases corporately defining a receiving chamber for receiving a battery cell positioned in the battery housing, each battery cell protecting case comprising a conductive supporting plate (10,10a,10b,10c,10d) being provided with a layer of insulative material and an exposed portion (100,100a) without insulative material formed thereon and two nonconductive brackets (12, 12a, 12b, 12c, 12d) at two sides of the conductive supporting plate (10, 10a, 10b, 10c, 10d), each nonconductive bracket (12, 12a, 12b, 12c, 12d) defining a through slot (14, 14a, 14b, 14c, 14d) corresponding to the exposed portion (100, 100a) of the conductive supporting plate (10, 10a, 10b, 10c, 10d); and
a battery cell having a positive pole and an negative pole accommodated in the receiving chamber, one of the positive pole or the negative pole being electrically connected to the conductive supporting plate (10, 10a, 10b, 10c, 10d) and the other one of the positive pole or the negative pole being electrically connected to the conductive battery housing, the exposed portion (100, 100a) being capable of electrically contacting the conductive battery housing via the through slot (14, 14a, 14b, 14c, 14d) due to deformation of the conductive battery housing under pressure, so as to short circuit the power battery.

## Patentansprüche

1. Batteriezellenschutzverkleidung zum Montieren einer Batteriezelle mit einem positiven Pol und einem negativen Pol in einem leitfähigen Batteriegehäuse, das mit dem positiven Pol oder dem negativen Pol elektrisch verbunden ist, **dadurch gekennzeichnet, dass** das Batteriezellenschutzverkleidung aufweist:
eine leitfähige Halteplatte (10, 10a, 10b, 10c, 10d), die mit dem entsprechend anderen Pol aus dem positiven Pol oder dem negativen Pol der Batteriezelle elektrisch verbunden ist, und wobei die leitfähige Halteplatte (10,10a,10b,10c,10d) mit einer Schicht aus isolierendem Material und einem exponierten Bereich (100,100a), auf dem isolierendes Material nicht ausgebildet ist, versehen ist; und
eine nichtleitfähige Halterung (12,12a,12b,12c,12d), die mit der leitfähigen Halteplatte (10,10a,10b,10c,10d) verbunden ist, wobei die nichtleitfähige Halterung (12,12a,12b,12c,12d) einen Durchgangsschlitz (14,14a,14b,14c,14d) aufweist, der dem exponierten Bereich (100, 100a) entspricht, wobei der exponierte Bereich (100, 100a) geeignet ist, über den Durchgangsschlitz (14,14a,14b,14c,14d) aufgrund einer bei Druck auftretenden Verformung des leitfähigen Batteriegehäuses eine elektrische Verbindung zu dem leitfähigen Batteriegehäuse herzustellen.

2. Batteriezellenschutzverkleidung nach Anspruch 1, **dadurch gekennzeichnet, dass** eine Außenfläche der nichtleitfähigen Halterung (12,12a,12b,12c,12d) 0,5 bis 3,0 mm höher liegt als eine Außenfläche der leitfähigen Halteplatte (10,10a,10b,10c,10d).

3. Batteriezellenschutzverkleidung nach Anspruch 2, **dadurch gekennzeichnet, dass** die leitfähige Halteplatte (10,10a,10b,10c,10d) mit einer Schicht aus einem nichtleitfähigen Trennelement versehen ist, und der exponierte Bereich (100,100a) in dem Durchgangsschlitz (14, 14a, 14b, 14c, 14d) mit mindestens einem scharfen Vorsprung (20c) versehen ist, der das Trennelement einritzen und das verformte leitfähige Batteriegehäuse kontaktieren kann, wenn ein Druck auf die Leistungsbatterie einen vorbestimmten Wert übersteigt.

4. Batteriezellenschutzverkleidung nach Anspruch 3, **dadurch gekennzeichnet, dass** der scharfe Vorsprung (20c) 0,1 bis 1,0 mm tiefer liegt als die Außenfläche der nichtleitfähigen Halterung (12,12a,12b,12c,12d).

5. Batteriezellenschutzverkleidung nach Anspruch 1, **dadurch gekennzeichnet, dass** die nichtleitfähige Halterung (12,12a,12b,12c,12d) mit einem Querstreifen (16a) mit einer Breite von 1 bis 5 mm über dem Durchgangsschlitz (14,14a,14b,14c,14d) versehen ist.

6. Batteriezellenschutzverkleidung nach Anspruch 1, **dadurch gekennzeichnet, dass** die nicht-leitfähige Halterung (12,12a,12b,12c,12d) mindestens zwei Durchgangsschlitze (14,14a,14b,14c,14d) mit einem Blockierbereich (18b) mit einer Breite von 1 bis 3 mm zwischen zwei benachbarten Durchgangsschlitzen (14,14a, 14b,14c,14d) begrenzt, ein Ausschnitt (19b) zur Aufnahme des Blockierbereichs (18b) unter dem Blockierbereich (18b) gebildet ist, wobei der Blockierbereich (18b) so verformt wird, dass er in dem Ausschnitt (19b) aufgenommen wird, wenn der Druck auf die Leistungsbatterie einen vorbestimmten Wert übersteigt, wodurch bewirkt wird, dass das deformierte leitfähige Batteriegehäuse mit dem exponierten Bereich (100,100a) in dem Durchgangsschlitz (14,14a,14b,14c,14d) elektrisch in Kontakt tritt.

7. Batteriezellenschutzverkleidung nach Anspruch 1, **dadurch gekennzeichnet, dass** die nichtleitfähige Halterung (12, 12a, 12b, 12c, 12d) mit einem Verriegelungsblock (22d), der sich in dem Durchgangsschlitz (14, 14a, 14b, 14c, 14d) erstreckt, versehen ist, so dass ein Druck gegen den exponierten Bereich (100, 100a) ausgeübt wird, wobei der Verriegelungsblock (22d) verformt wird, wenn der Druck auf die Leistungsbatterie einen vorbestimmten Wert übersteigt, so dass der exponierte Bereich (100, 100a) freigegeben wird, wodurch bewirkt wird, dass der exponierte Bereich (100, 100a) nach oben ausfedert und mit dem leitfähigen Batteriegehäuse elektrisch in Verbindung tritt.

8. Batteriezellenschutzverkleidung nach einem der Ansprüche 1 bis 7, **dadurch gekennzeichnet, dass** der Durchgangsschlitz (14, 14a, 14b, 14c, 14d) in der Mitte der nichtleitfähigen Halterung (12, 12a, 12b, 12c, 12d) gebildet ist.

9. Batteriezellenschutzverkleidung nach einem der Ansprüche 1 bis 7, **dadurch gekennzeichnet, dass** der Durchgangsschlitz (14, 14a, 14b, 14c, 14d) eine Krümmung von 60 bis 90 Grad und eine Breite von 10 bis 50 mm, vorzugsweise 20 bis 30 mm, hat.

10. Leistungsbatterie mit starrer Umhüllung, mit:
einem leitfähigen Batteriegehäuse;
einem Paar aus Batteriezellenschutzverkleidungen, die zusammen eine Aufnahmekammer für die Aufnahme einer in dem Batteriegehäuse angeordneten Batteriezelle bilden, wobei jede Batteriezellenschutzverkleidung eine leitfähige Halteplatte (10, 10a, 10b, 10c, 10d) aufweist, die mit einer Schicht aus isolierendem Material und einem exponierten Bereich (100, 100a) ohne ein darin ausgebildetes isolierendes Material und mit zwei nichtleitfähigen Halterungen (12, 12a, 12b, 12c, 12d) an zwei Seiten der leitfähigen Halteplatte (10, 10a, 10b, 10c, 10d) versehen ist, wobei jede nichtleitfähige Halterung (12, 12a, 12b, 12c, 12d) einen Durchgangsschlitz (14, 14a, 14b, 14c, 14d) entsprechend zu dem exponierten Bereich (100, 100a) der leitfähigen Halteplatte (10, 10a, 10b, 10c, 10d) begrenzt; und
einer Batteriezelle mit einem positiven Pol und einem negativen Pol, die in der Aufnahmekammer aufgenommen ist, wobei der positive Pol oder der negative Pol mit der leitfähigen Halteplatte (10, 10a, 10b, 10c, 10d) elektrisch verbunden ist, und der entsprechende andere Pol aus dem positiven Pol oder dem negativen Pol mit dem leitfähigen Batteriegehäuse elektrisch verbunden ist, wobei der exponierte Bereich (100, 100a) in der Lage ist, das leitfähige Batteriegehäuse über den Durchgangsschlitz (14, 14a, 14b, 14c, 14d) aufgrund einer bei Druck auftretenden Verformung des leitfähigen Batteriegehäuses elektrisch zu kontaktieren, so dass die Leistungsbatterie kurzgeschlossen ist.

## Revendications

1. Boîtier de protection de cellule de batterie pour un assemblage d'une cellule de batterie présentant un pôle positif et un pôle négatif dans un logement de batterie conducteur étant électriquement connecté à un du pôle positif ou du pôle négatif, **caractérisé en ce que** le boîtier de protection de cellule de batterie comprend :
une plaque de soutien conductrice (10, 10a, 10b, 10c, 10d) étant électriquement connectée à l'autre du pôle positif ou du pôle négatif de la cellule de batterie, et la plaque de soutien conductrice (10, 10a, 10b, 10c, 10d) présentant une couche de matériau isolant et une partie exposée (100, 100a) sans matériau isolant formée au-dessus ; et
un support non conducteur (12, 12a, 12b, 12c, 12d) couplé à la plaque de soutien conductrice (10, 10a, 10b, 10c, 10d), le support non conducteur (12, 12a, 12b, 12c, 12d) disposant d'une fente traversante (14, 14a, 14b, 14c, 14d) correspondant à la partie exposée (100, 100a), la partie exposée (100, 100a) étant capable d'une connexion électrique au logement de batterie conducteur via la fente traversante (14, 14a, 14b, 14c, 14d) du fait d'une déformation du logement de batterie conducteur sous une pression.

2. Le boîtier de protection de cellule de batterie de la revendication 1, **caractérisé en ce qu'**une surface extérieure du support non conducteur (12, 12a, 12b, 12c, 12d) est plus haute de 0,5 à 3,0 mm qu'une surface extérieure de la plaque de soutien conductrice (10, 10a, 10b, 10c, 10d).

3. Le boîtier de protection de cellule de batterie de la revendication 2, **caractérisé en ce que** la plaque de soutien conductrice (10, 10a, 10b, 10c, 10d) est formée d'une couche de séparateur non conducteur, et la partie exposée (100, 100a) dans la fente traversante (14, 14a, 14b, 14c, 14d) est formée d'au moins une protubérance aiguë (20c) qui peut percer le séparateur et entrer en contact avec le logement de batterie conducteur déformé lorsque la pression sur la batterie d'alimentation est supérieure à une valeur prédéterminée.

4. Le boîtier de protection de cellule de batterie de la revendication 3, **caractérisé en ce que** la protubérance aiguë (20c) est plus basse de 0,1 à 1,0 mm que la surface extérieure du support non conducteur (12, 12a, 12b, 12c, 12d).

5. Le boîtier de protection de cellule de batterie de la revendication 1, **caractérisé en ce que** le support non conducteur (12, 12a, 12b, 12c, 12d) est formé d'une bande transversale (16a) présentant une largeur de 1 à 5 mm sur la fente traversante (14, 14a, 14b, 14c, 14d).

6. Le boîtier de protection de cellule de batterie de la revendication 1, **caractérisé en ce que** le support non conducteur (12, 12a, 12b, 12c, 12d) définit au moins deux fentes traversantes (14, 14a, 14b, 14c, 14d) avec une partie bloquante (18b) présentant une largeur de 1 à 3 mm entre deux fentes traversantes adjacentes (14, 14a, 14b, 14c, 14d), une découpe (19b) pour une réception de la partie bloquante (18b) est définie sous la partie bloquante (18b), la partie bloquante (18b) est déformée pour être accueillie dans la découpe (19b) lorsque la pression sur la batterie d'alimentation est supérieure à une valeur prédéterminée, entraînant ainsi la connexion électrique du logement de batterie conducteur déformé avec la partie exposée (100 ; 100a) dans la fente traversante (14, 14a, 14b, 14c, 14d).

7. Le boîtier de protection de de cellule de batterie de la revendication 1, **caractérisé en ce que** le support non conducteur (12, 12a, 12b, 12c, 12d) est formé d'un bloc de verrouillage (22d) s'étendant dans la fente traversante (14, 14a, 14b, 14c, 14d) pour s'appuyer contre la partie exposée (100, 100a), le bloc de verrouillage (22d) est déformé lorsque la pression sur la batterie d'alimentation est supérieure à une valeur prédéterminée pour libérer la partie exposée (100, 100a), entraînant ainsi un rebond vers le haut de la partie exposée (100, 100a) et sa connexion électrique avec le logement de batterie conducteur.

8. Le boîtier de protection de cellule de batterie de l'une quelconque des revendications 1 à 7, **caractérisé en ce que** la fente traversante (14, 14a, 14b, 14c, 14d) est définie dans un centre du support non conducteur (12, 12a, 12b, 12c, 12d).

9. Le boîtier de protection de cellule de batterie de l'une quelconque des revendications 1 à 7, **caractérisé en ce que** la fente traversante (14, 14a, 14b, 14c, 14d) présente une courbure de 60 à 90 degrés et une largeur de 10 à 50 mm, préférablement 20 à 30 mm.

10. Une batterie d'alimentation à coque rigide, comprenant :
un logement de batterie conducteur ;
une paire de boîtiers de protection de cellule de batterie définissant collectivement une chambre de réception pour une réception d'une cellule de batterie positionnée dans le logement de batterie, chaque boîtier de protection de cellule de batterie comprenant une plaque de soutien conductrice (10, 10a, 10b, 10c, 10d) présentant une couche de matériau isolant et une partie exposée (100, 100a) sans matériau isolant formée au-dessus et deux supports non conducteurs (12, 12a, 12b, 12c, 12d) sur deux côtés de la plaque de soutien conductrice (10, 10a, 10b, 10c, 10d), chaque support non conducteur (12, 12a, 12b, 12c, 12d) définissant une fente traversante (14, 14a, 14b, 14c, 14d) correspondant à la partie exposée (100, 100a) de la plaque de soutien conductrice (10, 10a, 10b, 10c, 10d) ; et
une cellule de batterie présentant un pôle positif et un pôle négatif installés dans la chambre de réception, un du pôle positif ou du pôle négatif étant électriquement connecté à la plaque de soutien conductrice (10, 10a, 10b, 10c, 10d) et l'autre du pôle positif ou du pôle négatif étant électriquement connecté au logement de batterie conducteur, la partie exposée (100, 100a) étant capable d'un contact électrique avec le logement de batterie conducteur via la fente traversante (14, 14a, 14b, 14c,14d) du fait d'une déformation du logement de batterie conducteur sous une pression, de sorte à court-circuiter la batterie d'alimentation.
